Europäisches Patentamt

European Patent Office

Office européen des brevets

(19)

(11) Publication number: **0 370 815**
**A2**

(12) # EUROPEAN PATENT APPLICATION

(21) Application number: **89312187.1**

(22) Date of filing: **23.11.89**

(51) Int. Cl.5: **G05D 23/19, F25B 49/02, F25D 29/00**

(30) Priority: **23.11.88 GB 8827343**

(43) Date of publication of application:
**30.05.90 Bulletin 90/22**

(84) Designated Contracting States:
**DE ES GB IT SE**

(71) Applicant: **MacFarlane, William Ian**
**PO Box 301 Newton Mearns**
**Glasgow G77 6UE Scotland(GB)**

(72) Inventor: **MacFarlane, William Ian**
**PO Box 301 Newton Mearns**
**Glasgow G77 6UE Scotland(GB)**

(74) Representative: **Naismith, Robert Stewart et al**
**CRUIKSHANK & FAIRWEATHER 19 Royal**
**Exchange Square**
**Glasgow, G1 3AE Scotland(GB)**

(54) **Thermostatic control apparatus.**

(57) Thermostatic control apparatus for use with refrigerators, freezers and the like is described. The apparatus includes a power control device (Q1) which is only allowed to turn on to supply power to a compressor (14) several degrees after the zero crossing point of the A.C. voltage signal which is applied to the compressor windings. This residual piece of sinewave is controlled to be sufficient to provide the internal DC voltage supply to a control circuit (10). Embodiments of the invention are described with accompanying drawings.

EP 0 370 815 A2

# THERMOSTATIC CONTROL APPARATUS

The present invention relates to thermostatic control apparatus and particularly, but not exclusively, to such apparatus for use with refrigerators, freezers and the like.

Thermostatic controllers for high-volume low-cost applications such as domestic refrigerators and freezers are typically of electro-mechanical construction. Such thermostats usually consist of a pair of electrical contacts which switch the refrigerator compressor circuit directly. Movement of the contacts is controlled by bellows which is connected to a capillary tube which is routed to the position at which the temperature is to be controlled, and which may have its sensing end clamped to an evaporator plate or coil. The tube and bellows are filled with gas and this arrangement is inexpensive, fairly reliable and is manufactured in very large quantities.

There are a number of disadvantages with such existing controllers. One disadvantage is that the electro-mechanical controller is dependent on power switching mechanical contacts which are subject to wear and arcing over the life of the unit. Also the accuracy of the temperature switching point is normally to be set in test and this is also subject to mechanical wear and ambient pressure and temperature. A further disadvantage is that the accuracy of the controller is also affected by the position of the bellows and capillary tubes in different temperatures; for example, if the bellows and the run of the tube are inside or outside the refrigerated area. Another problem is that the setting control must be at the position of the bellows while the capillary may have to be sensed in a remote position and this causes difficulty in manufacture and possible failure of the tube due to work hardening under vibration.

In addition the electro-mechanical thermostat is basically a two-wire device in the supply circuit to the compressor. In more complex control devices, for example, frost free freezers which require defrost timing cycles, other temperature sensors, and often the control of a circulating fan, these features have to be added, usually in the form of electro-mechanical timers with additional capillary-bellows controls. This leads to more complex wiring and with the disadvantages of further elements which can wear and which can have contact problems.

Other functions of the refrigerator unit, for example, interior light switches, may be controlled electronically at a low cost if there is a commonality of power supplies, sensors and other components and this is not easily achieved with an electro-mechanical assembly. It is also known that in induction motor compressor drives the motor has to be designed for frequent starts on the normal temperature compressor cycle. This, in turn, may lead to high motor losses during normal and light load running as the motor is being run at a maximum voltage and internal losses factor. This can be improved by supplying the motor with a reduced voltage during the running period.

It is an object of the present invention to provide an improved thermostatic control apparatus which obviates or mitigates at least one of the aforementioned disadvantages associated with existing thermostatic controllers.

This is achieved by using a power control device which is only allowed to turn on to supply the compressor several degrees after the zero point of the AC voltage which is applied to the compressor windings. This residual piece of sinewave is controlled to be sufficient to provide the internal DC supply to a control circuit.

Conveniently, the power control device is a triac with a controllable turn on delay which is used in a two-wire system. Alternatively the power control device may be a pair of thyristors coupled in a reverse parallel arrangement.

In one embodiment, a basic refrigerator thermostatic controller is provided and in another embodiment a thermostatic controller is provided which incorporates a heater and a fan driven from the same power supply for use with a frost free freezer.

The electronic thermostatic controller permits further sensing devices to be incorporated into the supply circuit such as electronic door switches and alarms. In addition the use of cheap electronic thermostats in domestic refrigerators and freezers opens the possibility of the use of electronics for other functions. The majority of domestic refrigerators and freezers are sold in a highly competitive market and costs are kept to a minimum. It is therefore difficult to introduce improvements if costs are increased by their introduction. However, once an electronic device, such as a thermostat is introduced, common functions, such as power supplies or sensing devices, become a possibility and can lead to a cost reduction which may make the adoption of further devices possible.

One mechanical device on most cabinets is a mechanical door switch which is used to switch 'off' the interior light when the door is closed. If sufficiently sensitive to a slightly open door the switch may also be used to operate a 'door open' alarm, which be either visible or audible. Such an alarm is particularly useful since a 'door open' condition means that cold air is escaping and warm air is being drawn into the cabinet and also that the interior light is 'on' causing extra heating. This causes the compressor to work harder to hold the set temperature and faster 'icing-up of the freezer cooling means. When ambient temperatures are high it may not be possible for the cooling unit to maintain the desired temperature which could then result in deterioration of the food content.

While the mechanical switch is reasonably reliable it is subject to wear and to deterioration of the contacts over its working life, and in the lever used to operate the switch. It is also not particularly sensitive requiring a considerable movement of the door to cause the switch to operate.

A further object of the invention is to provide an electronic contactless door switch which will obviate or mitigate these disadvantages. Such a device is described in which the cost of the device is substantially reduced by the device having a common power supply with an electronic thermostat or a thermostat which has a conventional power supply not derived from a part of the voltage wave applied to the compressor.

According to one aspect of the present invention there is provided thermostatic control apparatus for controlling the temperature of an environment, said apparatus being adapted to be connected to a temperature sensor, to a compressor and to an A.C. voltage supply, said apparatus comprising a power control device coupled between the A.C. voltage supply, and compressor control means for controlling the operation of said power control device to permit power to be supplied to said compressor, said compressor control means being coupled to said power control device and to a temperature sensor, the arrangement being such that, in use, when said temperature exceeds a first predetermined value said compressor control means is actuated to enable said power control device to switch power to said compressor to reduce the temperature of said environment and when the said temperature is reduced below a second predetermined value, the control means is actuated to enable said power control device to switch off the power to the compressor.

Preferably said power control device is a triac with a controllable delay and said compressor control means is a zero-crossing sensing circuit.

Preferably also a heater is connected in parallel with said compressor, said heater having a respective triac coupled thereto in series therewith and between the A.C. supply, the triac being coupled to said control means and to second control means so that when the compressor is switched off in response to the temperature of the environment attaining a preset value and after a preset time has elapsed the heater is actuated to heat the cooling apparatus and to provide an automatic defrost.

Conveniently, a fan is coupled in parallel with said compressor and said heater, said fan having a respective triac coupled thereto in series therewith and between the A.C. supply, the respective triac being coupled to said first and to said second control means to actuate said fan to operate when a predetermined temperature has been reached.

Alternatively, a fan is connected in parallel with the compressor and is driven by the power supply under the control of the same triac to switch on and off with the compressor.

According to another aspect of the invention there is provided a contactless door switch for fitting to a door of a refrigerator, said switch being connectable to the power supply of an electronic thermostat or a thermostat with a power supply not derived from part of the voltage wave applied to the compressor.

Conveniently the switch is a hall effect switch or other magnetic switch. Alternatively the switch is an infra red reflective or vane-type switch or a capacitively coupled switch.

These and other aspects of the invention will become apparent from the following description when taken in combination with the accompanying drawings in which:-

Fig. 1 is a circuit diagram of an electronic thermostat in accordance with a first embodiment of the invention;

Figs. 2a to f are timing diagram wave forms which are present during the operation of the circuit shown in Fig. 1;

Figs. 3a and 3b are circuit diagrams of part of a circuit of Fig. 1 depicting the hysteresis effects obtained if a circuit is to prevent half cycle conduction of the triac;

Fig. 4 is a circuit diagram of a second embodiment of a thermostatic controller in accordance with the present invention for use with a frost-free freezer;

Fig. 5 is a circuit diagram of a third embodiment of a thermostatic controller in accordance with the present invention;

Fig. 6a, b, and c are views of part of a fridge door assembly incorporating one type of contactless door switches for use with the embodiments shown in Figs. 1 to 5, and

Figs. 7a, 7b and 7c and Fig. 8 are similar views of part of a fridge door assembly with a different type of contactless door switch.

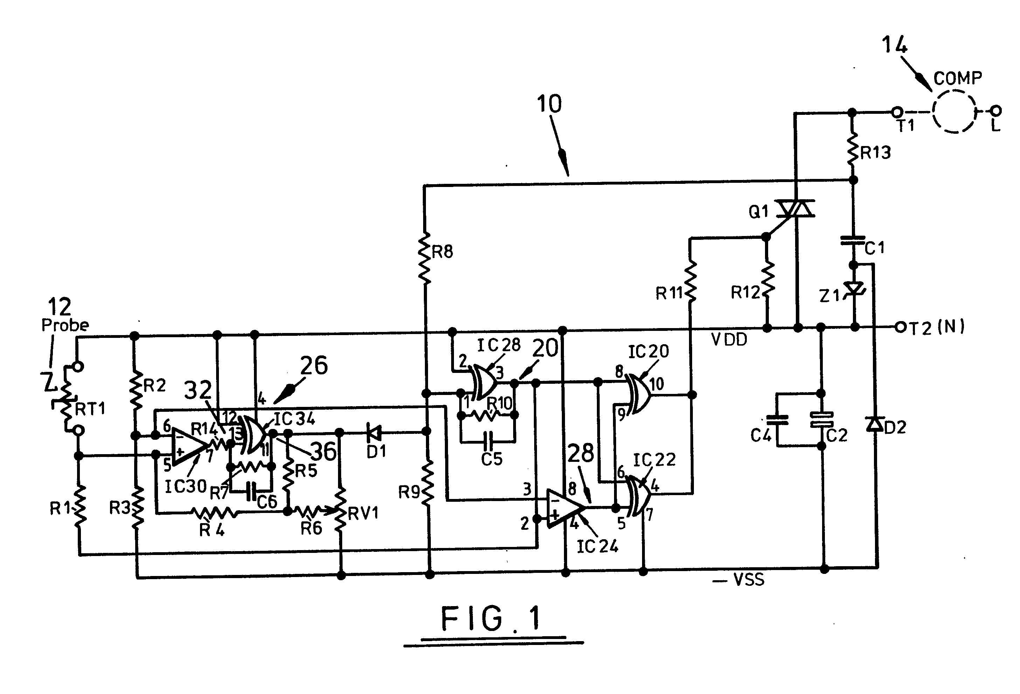

Reference is first made to Fig. 1 of the drawings which is a circuit diagram of an electronic thermostat generally indicated by reference numeral 10 which is coupled between a probe 12 mounting on the plate of a cooling coil for sensing the temperature and a compressor 14.

The circuit is connected by terminals $T_1$, $T_2$, to the A.C. supply terminals L,N so that the current can be switched on the line or neutral line. Termi-

nal $T_1$ is connected to the live line N via the compressor 14.The circuit has two terminals $T_1$, $T_2$ and is a two-wire circuit. The circuit is based around a power control triac Q1 which, as will be described later in detail, is only allowed to turn on to supply the compressor several degrees after the zero point of the AC voltage which is applied to the compressor windings. This residual piece of sine wave is controlled to be just sufficient to provide the internal DC supply to the control circuit 10.

The supply to the compressor windings is established by the following components: $R_{13}$, $C_1$, $Z_1$ and $D_2$. The action of $R_{13}$ and $C_1$ is fourfold:-

1. $C_1$ acts as a 'snubber' circuit for Triac $Q_1$ to limit the rate of change of commuting voltage across $Q_1$ which is caused by the highly inductive nature of the compressor motor, especially under starting conditions. $R_{13}$ limits the peak of the resonant voltage due to this inductance and capacitor $C_1$, and limits the discharge current of $C_1$, through $Q_1$ at turn-on.

2. $R_{13}$ and $C_1$ establish latching and holding currents for triac $Q_1$ because the current through the compressor inductance does not build up sufficiently quickly without an extended gate drive pulse (which would absorb extra supply current).

3. $C_1$ acts as a capacitive dropper to the power supply. As it does not dissipate heat it is particularly suitable in a refrigerator application. $C_1$ and $R_{13}$ supply an alternating current both when $Q_1$ is off and when it is conducting at a large conduction angle. This current flows, via diode $D_2$, to the supply rail $-V_{ss}$ during the negative going voltage to the sine wave and is clamped by zener diode $Z_1$ in its forward direction to one diode drop on the positive half-cycle. When the negative voltage on $-V_{ss}$ 5 volts is such that it exceeds the zener voltage by one diode voltage drop, $Z_1$ conducts as a zener, thus limiting the $-V_{ss}$ rail to $(V_z-0.7)$ volts. The half-wave current through $D_2$ is smoothed by $C_2$ to give a reasonable direct voltage. $C_4$ is a higher frequency decoupling capacitor to protect against logic malfunction due to supply noise.

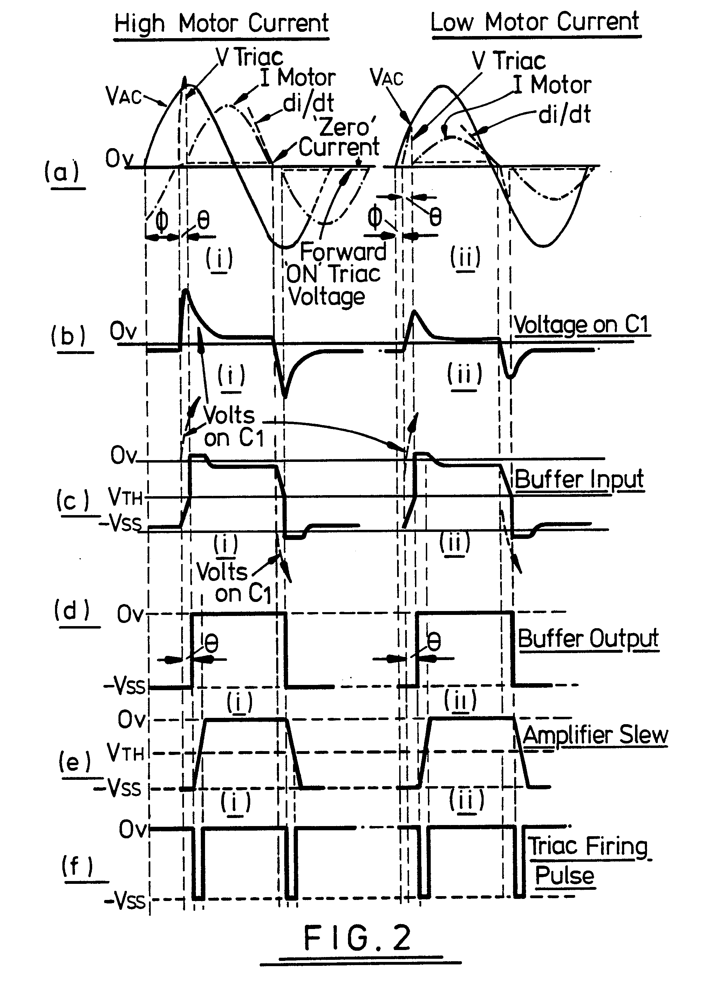

4. $R_{13}$ and $C_1$ provide a slightly variable phase-delay for the zero-crossing sensing circuit via $R_8$ (etc.). When high currents occur on starting the power factor is low (0 is the phase-angle at each condition), the load is more inductive and the switch-off of $Q_1$ occurs near to $90°$ (i.e. peak supply volts and approximately zero current). This is best seen in Fig. 2a (i). The higher sinusoidal current produces a higher rate of change of current with time (di/dt) at the point of Q1 switch off. This is at the point (near zero) at which the current drops below the holding current of the triac.There is still some energy stored $(0.5LI^2)$ in the load inductance and this produces an additional voltage it can increase the voltage applied to the triac to above its safe value, so an energy absorbing (and voltage limiting) 'snubber' network is connected in parallel with the triac. As indicated above this comprises resistor R13 and capacitor C1. This higher transient charges $C_1$ quickly and the delay to the next turn-on pulse is short. At low loads the triac turns off at a lower point on the sine-wave, $C_1$ charges less quickly and the next turn-on pulse occurs later. This provides a rudimentary 'power factor' control by slightly reducing the voltage supplied to the motor at low loads. $R_8A$ and $C_7$ now provide a similar function to extend this delay. Fig. 2b shows the voltage at the junction of R13 and C1. There is a phase-shift caused by this network and the waveform lags the triac voltage by a small phase angle. however, the rate of charge of C1 is set by the rate and amplitude of the voltage across the triac at turn-off and as described above, this is higher at higher loads and lower power factors. C1 therefore charges, under these conditions, faster and to a higher peak value then under low loads as can be seen by comparing Fig. 2b (i) and Fig. 2b (ii). This voltage is fed via resistor R8 to the input of a non-inverting buffer, IC2 (1,2,3) which has a threshold of, typically, 45% of its supply voltage and which, as will be described perform the detection of zero-crossing. Resistor R10 provides a DC positive feed-back from output to input and R9 (which is also approximately the same value as R8) ensures that, for zero voltage on C1 the voltage at the input to the buffer is around the gate threshold. This supply is taken from the rail relatively negative to 'zero' volts (i.e. to neutral N). $R_{13}$ and $C_1$ also help to suppress RFI and dv/dt coupled into the control circuit.

The detection of the zero-crossing is performed by $IC_2$ (18) which is a HCMOS Quad Ex-NOR gate (or analogue OP AMP or comparator) connected as a non-inverting buffer. Because the supply is negative and the gate threshold is around 45% of the $-V_{ss}$ supply, the value of resistor $R_9$ is chosen to set the voltage at around zero on the triac, to be near this threshold. Because the triac Q1 has $^+1$ volts approximately across it when 'on',this buffer is provided with positive feedback via $R_{10}$ and $C_5$ to ensure that it switches cleanly - and only when the polarity of the sine-wave has changed to the opposite sign from this $^+1$ volt level. This is best seen from Fig. 2c which shows the voltage at the input to the buffer. The positive AC feed-back by C5 ensures fast switching, prevents noise and provides a further stage of phase lag. This is similar to the delay created by R13 and C1 and has the effect of delaying the switching point for lower values of current and higher values of power factor. The buffer - which is a CMOS IC - has input protection diodes which clamp the input to one diode forward drop outside the supply rails. The result is a square wave at $IC_2$ (3) slightly phase delayed from the voltage across $Q_1$. The buffer output is shown in Fig. 2(d) which shows the output 20 of the buffer IC2(18) which is a square wave with a delay angle relative to the current zero. This square wave is fed to one input (6,8) of IC 20 and 22 respectively which are exclusive-NOR gates (paralleled for increased output current) and to the non-inverting input of an operational amplifier IC 24. The inverting input 3 of the OP-AMP 24 has a threshold voltage of half the supply applied to it. When the square wave from the buffer is applied, the amplifier 'slews' at a much slower rate but with the same polarity as the square wave.

This waveform can be disabled by the action of the temperature sensing circuit (via $D_1$) since the current through $R_8$ (etc.) is sufficiently small to be diverted by IC26 (11) to the $-V_{ss}$ rail.

When the square wave at output 20 is enabled, it is fed to IC's 20 and 22 and, via OP-AMP 24 to other inputs (5,9) of IC's 20 and 22 The lower slew rate of IC 24 which is connected as a buffer (with a threshold on its inverting input of 0.5 $V_{ss}$ provided by $R_2$ and $R_3$) provides a 'Trapezoidal' wave at its output 28 as best seen in Fig. 2 (e) which is sufficient to give a short negative going pulse shown in Fig. 2(f) at each positive and negative transition of the square wave due to the 'EX-NOR' function. The function of the exclusive -NOR gate is to go 'low' if the inputs are not equal. When the square wave and its slower counterpart are applied to EX-NOR IC 20 and IC 22 the output goes low for the time taken for the amplifier to 'slew' to the threshold of the second input. For a voltage of 5V. the OP-AMP has a slew rate of 0.5 V/uS means that it takes 10 uS to move from rail to rail and therefore approximately 5 uS to reach the CMOS threshold (2.5 volts). This gives, approximately a 5 uS negative going pulse. This is long enough to ensure that the triac $Q_1$ is triggered in the negative gate quadrant for both positive and negative main terminal voltages. IC20 and IC22 are paralleled to give sufficient negative drive via resistor $R_{11}$ to the gate of Q1 to ensure its turn-on at $0^°$ . This negative drive is the most sensitive Unipolar drive mode for the Triac.

Reference is now made to Fig. 2 (f) which shows the pulse which turns the triac $Q_1$ 'on' during each half cycle at a phase lag O which is determined by the load current and its phase-angle as described. At high loads the delay O is short and nearly full voltage is applied to the motor; at low loads delay O is longer and the motor voltage is reduced. This, in turn, automatically reduces the light load iron and copper losses in the motor.

When the temperature measured by NTC thermister $RT_1$ is sufficiently low, IC 24 switches 'low' and IC 20,22 pulls the input of the buffer low through D1. This prevents further switching of the buffer and the following circuits and the triac $Q_1$ is turned off until the temperature again goes high. The triac voltage waveform is now virtually the same as the supply and the wave for on C1 is also a sine wave with phase shift due to R13 and the compressor motor inductance . There are no current waveforms.

The input to the buffer, as shown in Fig. 2c is a DC value of 0.7 V above the - $V_{ss}$ rail. This is insufficient to reach the threshold of the buffer, so the buffer output, as shown is Fig. 2d is also at $-V_{ss}$. With no inequality between the inputs, the EX-NOR output waveform 5, is at zero volts.

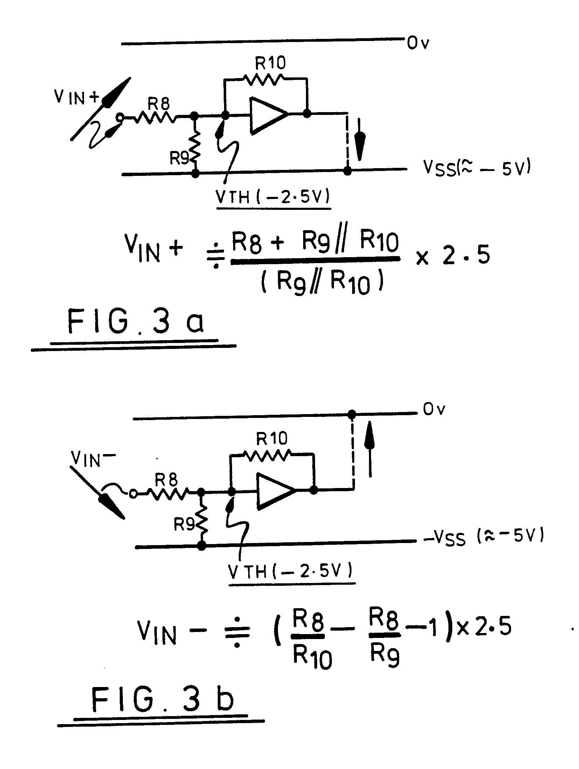

It should be understood that the gate threshold is only typically half the supply voltage and, since the triac voltage drops to around 1 volt when it is conducting, at the extremes of the threshold (30% to 70% of supply voltage), the voltage could reach the threshold during the same half cycle. this would result in half-cycle conduction of the triac and 'hysteresis' resistor R10 is used to prevent this happening. However, R10 also has a beneficial effect by delaying the switching of the buffer relative to current zero and acts in conjunction with the delays caused by C1 and C5. R10 is effectively in parallel with R9 when the voltage is below the threshold - but going positive at the end of a negative half cycle - so the input voltage has to go to well above the value it would need to reach the gate threshold (half supply voltage) if R8 and R9 were the only constraints. similarly, when the input voltage is positive - but going negative at the end of a positive half cycle -R10is at zero volts and the input voltage has to go much more negative than the negative supply rail before the threshold is reached. The effect of the hysteresis on the input voltage $V_{IN}$ because of R10 is shown in Fig. 3(a) and 3(b) for $V_{IN}$ when positive and negative respectively. Temperature sensing is achieved by NTC thermistor $RT_1$ and OP-AMP $IC_{30}$ (5,6,7) connected as a comparator with hysteresis. When the thermistor temperature is high its resistance is low, and the voltage divider formed with $R_1$ and the hysteresis resistor R4 is such that the voltage on $IC_{30}$(6) can rise higher than 0.5 $V_{ss}$ (on the negative half-cycles of the square wave from $IC_{30}$(6). This causes $IC_{30}$(7) to be high and likewise the output of $IC_{34}$(11,12,13) which is also connected as a non-inverting buffer. $R_7$(and $C_6$ if fitted) provides positive feedback across this buffer to ensure clean switching, as otherwise the gate could oscillate around the switching point of $IC_1$. When $IC_{34}$(11) is high, $D_1$ is reversed biased and has no effect on the drive circuitry enabling the Triac to turn 'on' every half-cycle to apply power to the compressor.

As the temperature falls $RT_1$ increases in resis-

tance until the voltage divider causes the voltage on pin 6 of IC 30 to be less than 0.5 $V_{ss}$ and the output 36 starts to go low. When it reaches the threshold on pin 13 of IC 34 it causes that buffer to switch 'low' also, diverting the zero-crossing sense signal to $-V_{ss}$ and inhibiting the drive to the Triac Q1. The compressor is then switched off until the temperature rises sufficiently to overcome the hysteresis provided by network $R_4$, $R_5$, $R_6$ and potentiometer $RV_1$. These values are very carefully calculated to match the desired switching points. When the output 36 is low, $RV_1$ has little effect since the effective hysteresis resistance is typically $R_4$ + ($R_5$ in parallel with $R_6$) + $0.5KRV_1$ (where K is the ratio of $RV_1$ settings). Consequently when the temperature is low the setting of $RV_1$ does not appreciably alter the temperature to which $RT_1$ has to rise before it reaches the cut-in point. When the temperature is high, the output is high and now $RV_1$ alters the value of the network by a much larger amount, enabling the cut-in temperature to be adjusted. The precision required by the specification means that a precise thermistor is necessary. However, such devices are expensive. A thermistor of +5% resistance tolerance represents around +1°C. If this is used to keep the cost down, the values of $R_1$, $R_2$, $R_3$ and $R_4$ have to be fairly accurate so they do not add appreciably to the error.

It will be understood that resistor $R_1$ is supplied by square wave from output 20 of IC 28 When the compressor first turns on, the switching of IC 30 can occur only close to the zero sensing point and cannot occur to shorten the 5 microsecond drive pulse which occurs due to the delay between the two inputs, which, in turn, could adversely affect the reliability of the triac Q1.

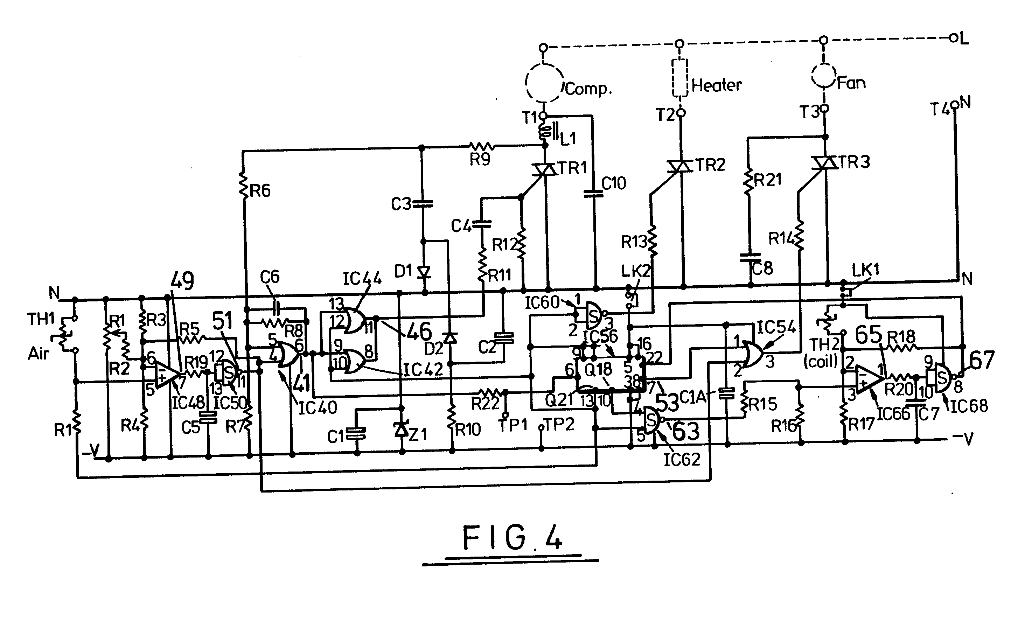

Reference is now made to Fig. 4 of the drawings which depicts an alternative embodiment of a thermostatic control circuit for use with a frost-free freezer. The operation of the compressor control section of the circuit is basically as described with reference to Fig. 1 except that the means to achieve the result are different.

The snubber network comprises resistor R9 and capacitor C3 and the voltage across C3 is fed via resistor R6 to a non inverting gate IC 40 which has positive feedback elements R8 and C6 and is tied to the negative rail -V via resistor R7. These components are equivalent to those described in the circuit of Fig. 1 and provide the same function. One difference lies in the method of operation where diode one input (Pin 4) of the 'OR' gate IC 40 is used to switch off the compressor when the temperature falls to its set value.

The waveforms across the triac, across capacitor $C_2$ and at input (pin 5) to the 'OR' gate IC 40 are identical to those described with reference to Fig. 1 as is the input on Pin 6.

A further difference is operation is in the generation of the triac firing pulses. Instead of the short single negative pulse in the negative gate quadrant shown in Fig. 2f, short positive and negative pulses are fed to the triac gate in appropriate phase, i.e. positive pulse in positive half-cycle and vice versa. The output 46 of the parallel gates IC42, 44 which is a square wave, is gated 'off' by the timer circuit to give differentiated pulses of correct polarity to the triac gate.

The snubber/power supply circuit $R_9$, $C_3$ for the main compressor control Triac $TR_1$ is increased in value and uses a Diode $D_1$ instead of a Zener to provide an unrelegated D.C. supply across $C_2$ which is negative with respect to neutral. This supply is then shunt regulated via $R_{10}$ by $Z_1$. Capacitor $C_1$ provides additional decoupling across the supply.

The zero-crossing circuit uses an 'OR' gate IC 40 in place of the EX-NOR used in Fig. 1. This gate is disabled by the air temperature sensing circuit $TH_1$, $R_1$ and IC 48 which drives IC 50. The drive to the Triac $TR_1$ gate is bipolar to utilise the most sensitive triggering quadrants as follows:-

On the positive half cycle of the wave-form across triac $TR_1$, a positive going square wave is generated (with a small variable phase delay as in Fig. 1 via IC 40, IC 42 and IC 44 in parallel. The output of the paralleled gates is capacitively coupled to the gate of triac $TR_1$ via $C_4$ and $R_{11}$ so that a short positive pulse is fed to the gate on the positive half cycle and a negative pulse on the negative half cycle.

The air temperature sensing circuit works slightly differently from that in Fig. 1 as an approximately constant hysteresis is generated by resistor R5. The switching level is adjusted by the setting of potentiometer $P_1$.

The output 49 of IC 48 is heavily filtered by the network $R_{19}$ and $C_5$ (if required). The time constant of this network may be set only to filter noise (e.g. 50 HZ pick-up) or to give a compressor delay of, say, 1 to 3 minutes to prevent short-cycling and prolonged starting current due to back pressure. IC 50 is a schmitt trigger which provides fast output switching (even with slow input edges) and hysteresis. This gives better noise and ripple rejection.

The output 51 of IC 50 is also used to enable the output of IC 54 which provides a negative 5 mA drive current, via current limit resistor $R_{14}$, to a sensitive gate Triac $TR_3$ to control the fan. The fan is switched 'on' at the same time as the compressor except when IC 54 is disabled by the output 53 of counter IC56 going high as a result of a too high coil temperature (as is described later). Resistor $R_{21}$ and capacitor $C_8$ and provide dv/dt 'snubbing' for the inductive component of the fan motor load.

The output 41 of IC 40 pin 6 is applied via resistor $R_{22}$ to the input of IC 56 so that, when the compressor is enabled by the air temperature sensing circuit, a 50 Hz wave is counted by counter IC 56. When the compressor is switched 'off' by the temperature sensing circuit counter 56 does not receive the 50 HZ wave and so does not count. When the total count reaches $2^{20}$ (i.e. about 5.825 hours of compressor run time) the output of pin 13 (Q21) goes high. This disables the drive to the compressor by means of IC 42 and IC 44. At the same time it enables the drive to the defrost heater through IC 60. This is a negative D.C. drive through current limit resistor $R_{13}$. Triac $TR_2$ is a sensitive gate device (5MA).

When output Q21 on pin 13 of IC 56 goes high it also forces the air temperature sensing circuit 'on' so the 50 HZ square wave is continuously supplied to the counter (although the compressor is still switched off). After a further $2^{17}$ cycles have been counted (about 43.7 minutes), the output 63 of IC 62 goes low forcing the output 65 of IC 66 low and the output of IC67 and IC 68 high. This resets the counter to zero and the outputs $Q_{21}$ and $Q_{18}$ return to a low state. This enables the compressor control circuit and re-starts the compressor.

In operation during the 43.7 minute period the coil temperature rises due to the operation of the de-frost heater. Thermistor $TH_2$ decreases in resistance until the voltage at pin 2 on IC 66, set by voltage divider $TH_2$, resistor $R_{17}$ and hysteresis resistor $R_{18}$, reaches the threshold of pin 3 on IC 66 set by $R_{15}$ and $R_{16}$ (this value is 100/151 x (-$V_{ss}$)). This should normally occur before the 43.7 minute period is reached; the output 65 of IC 66 goes low and the output of 67 if IC68 goes high and the convertor IC 56 is reset as before. When reset occurs, the coil temperature decreases quickly because the compressor has been re-started. However the output 65 stays low (whether it has been forced by temperature or time-out) because it is held by the hysteresis caused by $R_{18}$ until the temperature falls to the lower switching point of -18°C. At this point the reset is removed and the fan enabled. Provision is made for noise filtering with $R_{20}$ and $C_7$. The temperature of -18°C is reached quickly and only a small additional delay is caused before counting is re-started.

The fan has also been forced off during the 43.7 minute defrost back-up period by the output Q21 of IC 56 acting through the spare buffer in the counter IC 56 (on pins 7,9). This output is also forced high by the reset providing, in effect, an 'OR' gate with the reset.

$C_1A$ is an alternative position of $C_1$ or can be used for High frequency decoupling for the logic if required.

As in the first embodiment, to enable the use of a wider tolerance thermistor, $R_{15}$, $R_{16}$, $R_{17}$ and $R_{18}$ are carefully calculated to give precise cut-out temperatures. Test point $Tp_1$ coupled to pin 6 of IC 56 is provided to allow the injection of a suitable high frequency signal to speed up the counter and reduce cycle time for test purposes.

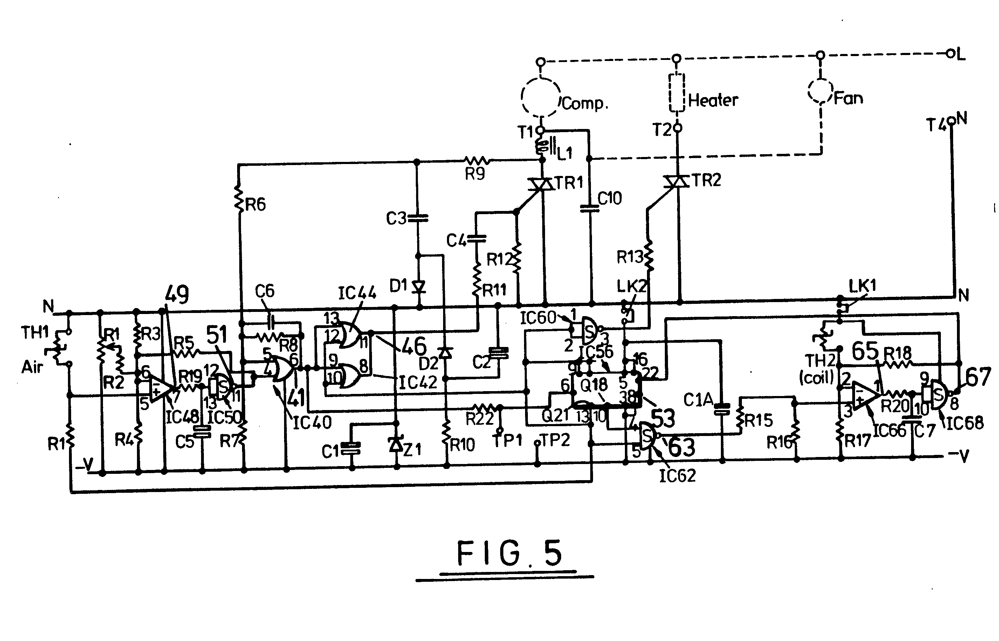

Reference is now made to Fig. 5 of the drawings which depicts a circuit similar to that shown in Fig. 4 in which like numerals denote like parts. In this case the fan is switched in parallel with the compressor and the thyristor control circuit is not required for the fan. In operation, the frost free controller operates exactly the same as for the controller shown in Fig. 4 except that the fan is not prevented from running above -18°C because the compressor and the fan is decoupled from the control circuit associated with IC56 and IC66 and IC68. this arrangement requires less components than that shown in Fig 4 and is likely to be less expensive to manufacture.

It will be appreciated that the triac $Q_1$ and $TR_1$ and $TR_2$ and $TR_3$ could be replaced by a pair of reverse parallel thyristors which are coupled to operate as a power switch in the same way as the triac's.

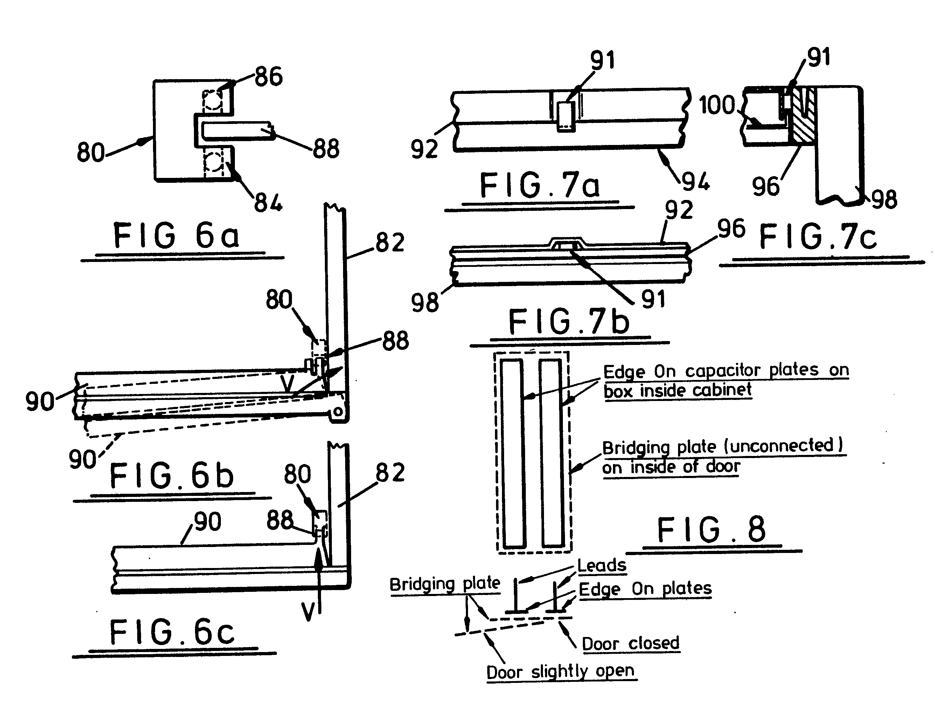

Reference is now made to Figs. 6a, b and c of the drawings which show a contactless IR door switch fitted to a refrigerator door. The switch operates on the principle of an Infra-Red IC beam sensor being interupted by a vane. A channel 80 is fixed to a wall 82 of a refrigerator and an IR emitter 84 and IR photo-transistor receiver 86 are disposed in opposite sides of the channel. A vane 88 is mounted on the fridge door 90 which moves in the direction of arrow V and interrupts the beam when the door 90 is closed (solid outline). In this case the beam is directed vertically upwards which allows the receiver to be sheltered from any extraneous influences including the light source itself. The vane 88 enters the channel 80 between the emitter 84 and receiver 86 from the side or the front depending on which side the door is hinged (Fig. 6b and 6c shows a right hand hinge and left hand hinge respectfully). When the door is ajar, the vane as shown in broken outline, does not interrupt the beam and the photo-transistor 86 detects a signal and provides an output to actuate an interior light and may also activate a visual and/or audible alarm that the door 90 is open. The electronic circuitry for processing a detected IR signal and for actuating an alarm is well known in the art and forms no part of the invention.

In order to increase the sensitivity of the device to small door movements, the IR beam maybe projected against a reflective surface on the door so that the reflected beam causes the receiver to operate when the door is closed. A small movement of the door is sufficient to deflect the beam substantially and so operate the light switch.

In this case the beam may be pulsed or otherwise coded, so the sensor only responds to the reflected signal. The cost of the additional components when the power is supplied in common with the thermostat is of an order similar to the cost of the mechanical switch but with the advantage of contactless switching and enhanced sensitivity.

Reference is now made to Figs. 7a, b and c of the accompanying drawings which shows an alternative type of contactless switch the sensing element of which may be a a Hall effect switch or a magneto resistor element 91 placed in front of the metal casing 92 of cabinet 94 in an indentation and operated by a magnetic door seal 96 mounted on door 98 which is used on most refrigerator cabinets. The Hall effect or magneto-resistor switch is driven from a two-wire circuit via leads 100. As is well known Hall effect devices generate a signal in the presence of a magnetic field and magnetic resistors alter in resistance value in a similar situation. The advantage of using a Hall effect device or magneto -resistor as a contactless switch sensor is that it uses the existing magnetic strip and power supply and the cost may be comparable with a mechanical switch. The integration of the switch into the electronic control system provides flexibility of use in displaying visual and/or audible alarms.

It will also be understood that other contactless door switches could be used, for example a switch based on capacitive coupling having 2 elongate strips and a movable strip secured to the door (Fig. 8) could be used instead of the IR switch or Hall effect switch. In this case no connection is made to the door plate and the elongate strips enable a workable capacitance to be achieved which is sensitive to small door movements.

## Claims

1. Thermostatic control apparatus for controlling the temperature of an environment, said apparatus being adapted to be connected to a temperature sensor, to a compressor and to an A.C. voltage supply, said apparatus comprising a power control device coupled between the A.C. voltage supply, and compressor control means for controlling the operation of said power control device to permit power to be supplied to said compressor, said compressor control means being coupled to said power control device and to a temperature sensor, the arrangement being such that, in use, when said temperature exceeds a first predetermined value said compressor control means is actuated to enable said power control device to switch power to said compressor to reduce the temperature of said environment and when the said temperature is reduced below a second predetermined value, the control means is actuated to enable said power control device to switch off the power to the compressor.

2. Thermostatic control apparatus as claimed in claim 1 wherein said power control device is a triac with a controllable delay and said compressor control means is a zero-crossing sensing circuit.

3. Thermostatic control apparatus as claimed 2 wherein a heater is connected in parallel with said compressor, said heater having a respective triac coupled thereto in series therewith and between the A.C. supply, the triac being coupled to said control means and to second control means so that when the compressor is switched off in response to the temperature of the environment attaining a preset value and after a preset time has elapsed the heater is actuated to heat the cooling apparatus and to provide an automatic defrost.

4. Thermostatic control apparatus as claimed in claim 3 wherein a fan is coupled in parallel with said compressor and said heater, said fan having a respective triac coupled thereto in series therewith and between the A.C. supply, the respective triac being coupled to said first and to said second control means to actuate said fan to operate when a predetermined temperature has been reached.

5. Thermostatic control apparatus as claimed in claim 3 wherein a fan is connected in parallel with the compressor and is driven by the power supply under the control of the same triac to switch on and off with the compressor.

6. A contactless door switch for fitting to a door of a refrigerator, said switch being connectable to the power supply of an electronic thermostat or a thermostat with a power supply not derived from part of the voltage wave applied to the compressor.

7. A contactless door switch as claimed in claim 6 wherein the switch is a hall effect switch or other magnetic switch.

8. A contactless door switch as claimed in claim 6 wherein the switch is an infra red reflective or vane-type switch or a capacitively coupled switch.

FIG.1

EP 0 370 815 A2

## F I G . 2

$$V_{IN}+ \;\doteq\; \frac{R_8 + R_9 /\!/ R_{10}}{(R_9 /\!/ R_{10})} \times 2 \cdot 5$$

## FIG. 3 a

$$V_{IN}- \;\doteq\; \left(\frac{R_8}{R_{10}} - \frac{R_8}{R_9} - 1\right) \times 2 \cdot 5$$

## FIG. 3 b

FIG.4

EP 0 370 815 A2

F I G. 5

EP 0 370 815 A2

86

80

88

84

## FIG 6a

91

92

94

## FIG. 7a

91

100

96

98

## FIG.7c

82

80

88

90

90

## FIG.6b

92

96

98

91

## FIG.7b

80

82

90

88

V

## FIG.6c

Edge On capacitor plates on box inside cabinet

Bridging plate (unconnected) on inside of door

## FIG. 8

Leads

Edge On plates

Bridging plate

Door closed

Door slightly open